# EUROPEAN PATENT SPECIFICATION

(11) **EP 0 435 593 B1**
(45) Date of publication and mention of the grant of the patent: **09.10.1996**
(21) Application number: 90314088.7
(22) Date of filing: 21.12.1990
(51) Int. Cl.: H04K 3/00, H04B 1/66

(54) **Transmitted code clock code-matching synchronization for spread-spectrum communication systems**
Kodeangepasste Synchronisation des Übertragungskodetaktes für Spreizspektrumübertragungssysteme
Synchronisation adaptée au code de l'horloge du code transmis pour systèmes de communication à spectre étalé

(30) Priority: 29.12.1989 US 459059
(43) Date of publication of application: 03.07.1991
(73) Proprietor: XEROX CORPORATION, Rochester New York 14644 (US)
(72) Inventor: Richley, Edward A., Mountain View, California 94040 (US)
(74) Representative: Johnson, Reginald George

(56) References cited:
- US-A- 4 095 226
- US-A- 4 969 160

## Description

This invention relates to spread-spectrum communication systems and, more particularly, to a relatively low power, code-matching synchronization technique for direct-sequence spread-spectrum communication systems.

Spread-spectrum communication systems characteristically spread the spectrum of the signals they transmit over a bandwidth which greatly exceeds the information bandwidth of the signals. As a general rule, communication systems of this type are designed to distribute the transmitted signal energy more or less uniformly throughout a relatively broad band of frequencies, so relatively little of the transmitted signal energy resides within any given narrow frequency band.

Spread-spectrum communication systems offer several advantages over conventional narrow band systems. For example, spread-spectrum signals are relatively immune to interference from, and are less likely to cause interference to, narrow band ("nonspread") signals. Furthermore, some spread-spectrum systems are compatible with the use of code-division multiplexing for carrying out multiple communications independently at the same time and frequency. As is known, code-division multiplexing is a convenient alternative to time division and frequency division multiplexing for sharing the spectrum among multiple users. In view of these advantages, it is believed that spread-spectrum communications will become more commonplace, especially within the license-free bands (i. e., 902-928 MHz, 2400-2483.5 MHz, and 5725 - 5850 MHz) which have been allocated for transmissions of this type at transmitted power levels of up to 1 watt, subject to certain restrictions relating to the distribution of the sideband energy.

Several techniques have been developed for performing the signal spreading for spread-spectrum communications, including "frequency hopping" where the center frequency of a RF carrier is cyclically varied at a relatively high rate in accordance with a predetermined table of frequencies, and "direct-sequence" spreading where the phase of the RF carrier is rapidly varied in accordance with a pseudo-random binary sequence or "code."

In a direct-sequence spread-spectrum communication system, the transmitter conventionally mixes a pseudo-random code-like sequence with an information modulated carrier signal, thereby distributing the signal energy throughout the available bandwidth. Any of a number of well known modulation techniques may be employed for impressing data or other information on the carrier. The phase modulation produced by the pseudo-random sequence causes the spectral density of the transmitted signal to be uniform to a first approximation across a wide band of frequencies. Straightforward digital circuitry is available for generating such pseudo-random sequences. However, improved methods and means still are needed for "de-spreading" the spectrum spreaded signal at the receiver so that the carrier can be recovered from it. To carry out this de-spreading function, the spread-spectrum signal appearing at the input of the receiver must be mixed with a pseudo-random sequence which is identical in both frequency and phase to the signal spreading sequence employed at the transmitter. This process commonly is referred to as "synchronization."

Several synchronization techniques have been developed for direct-sequence spread-spectrum communications. See, for example, R. C. Dixon, Spread-Spectrum Systems, 2 Ed., Chapter 6, John C. Wiley & Sons, 1984. Some of the approaches that have been proposed are very complicated, or rely on special spreading codes for enhancing synchronization. For instance, there are proposals which require the receiver to have multiple correlators operating in parallel in order to find the proper code phase for de-spreading the received signal. Thus, in the interest of simplifying this disclosure, the following discussion concentrates on the known synchronization techniques which are believed to be most relevant to this invention

One of the simpler of the available synchronization techniques is referred to as the "transmitted reference" method. This type of synchronization often is carried out by employing the same pseudo-random sequence for spreading the spectra of two carriers. The same information is impressed on both of these carriers, but the carrier center frequencies are sufficiently widely separated that there is no significant overlap between their sidebands in the frequency domain. Therefore, a carrier can be recovered at the receiver by mixing the outputs of a pair of tuned amplifiers, each of which is tuned to the spread-spectrum of a respective one of the transmitted carriers The frequency of the carrier which is recovered by the mixer is equal to the difference between the frequencies of the transmitted carriers, so the information content of the transmitted carriers is preserved because it is a "common mode" signal (i. e., common to both of the carriers). As will be appreciated, the receiver does not require any dedicated synchronization circuitry to carry out this synhronization process. However, that advantage is offset by significant disadvantages, including the susceptibility of the receiver to interference from other transmitters, and the lack of knowledge at the receiver of the transmitted code. Such knowledge is, of course, necessary if it is desired to employ code-division multiplexing.

There also are prior so-called "carrier lock tracking" synchronization techniques for direct-sequence spread-spectrum communication systems. To carry out this type of synchronization, the carrier is synchronized with the code clock at the transmitter, and a sliding correlator is employed within the receiver to search for the proper code phase. The sliding correlator characteristically comprises a pseudo-random code generator for driving a mixer to which the incoming spread-spectrum signal is applied. This code generator is matched to the transmitter code generator, so that it can substantially replicate the transmitted code sequence when it is operating in phase synchronism with the transmitter code generator. When, however, the receiver is operating in an idle or standby mode, its code generator is driven by a local clock source at a frequency which is offset slightly from the clock rate at which the transmitter code generator is driven, whereby the relative phase of their respective code sequences varies sufficiently slowly that correlation can be detected, typically in the time it takes for their relative phase to slip by one bit. Once correlation is detected, the receiver code clock switches over to the transmitted code rate, either by switching the receiver code generator so that it is clocked by a separate local clock which is preset to the same frequency as the transmitter code clock or by phase locking the receiver code clock to the carrier. Thus, in these known carrier lock tracking-type synchronizers, the sliding correlator is used to find lock, and carrier detection then is employed to maintain lock. If the spectrum spreading code sequence is of moderate length, lock can be obtained in a reasonable amount of time. The receiver essentially replicates the transmitted code sequence when it is locked to the transmitter, so code-division multiplexing can be employed for carrying out simultaneous communications between several different transmitter/receiver combinations over the same band of frequencies.

Known carrier lock synchronization techniques customarily tie the code clock frequency (i. e., the "code rate") to the carrier frequency, thereby restricting the designer's freedom of choice with respect to one or the other of those frequencies. As a general rule, the carrier frequency is significantly higher than the code rate, so a frequency divider typically is employed in the receiver for deriving the code rate from the carrier, even though this may create a phase ambiguity which then has to be resolved by the correlator. For example, if the carrier frequency is n times higher than the code rate (where n is an integer greater than one), n phases of the carrier will produce code phases within a one-bit wide correlation window, so the correlator then typically is required to determine which code phase provides the strongest carrier output for the best signal to noise ratio.

Others have attempted to reduce this code-phase ambiguity by augmenting the receiver with a local oscillator which is driven by a frequency multiplier at a frequency which is derived from the local code clock. In these systems, a mixer mixes the spread-spectrum signal that is received by the receiver with the frequency generated by the local oscillator, such that the carrier frequency is shifted to (n-m) f_{c}, where f_{c} is the carrier frequency of the transmitter, and m is the integer factor by which the frequency multiplier multiplies the receiver code clock frequency. Consequently, if (n-m) is selected to equal one, the frequency of the de-spread carrier is equal to the code clock rate or frequency, f_{ck}. Even then, however, there still may be an ambiguity caused by having two code phases within the one-bit wide correlation window because the relative phase of the transmitter and receiver code clocks is unknown and not easily predictable. See, Dixon, supra, at pp. 254-257.

Power consumption is another important consideration, especially for spread-spectrum communications between portable, battery powered stations, such as computers. In these applications, the receiver is likely to be powered-up continuously, so the amount of power it draws can be critical. Unfortunately, the frequency dividers employed in prior carrier lock tracking synchronization schemes tend to draw a substantial amount of power, especially when the communications are being carried out at very high frequencies, such as within one of the aforementioned license-free bands. At the current state of the art, emitter coupled logic (ECL) typically is required for frequency dividers operating at such high frequencies, but logic of that type is ill-suited for applications requiring power conservation. Furthermore, high signal levels are required for driving ECL dividers, so the amplifiers that are needed to provide such signal levels consume additional power. Therefore, there is a need for an economical and easily implemented lower power, code-division multiplexing compatible, synchronization technique for spread-spectrum communications.

In accordance with the present invention, the transmitter for a direct-sequence spread-spectrum communication system encodes its code rate into the phase difference between a pair of identically modulated carriers which it transmits to the receiver. The receiver, in turn, mixes the two carriers with each other to recover a signal having a frequency representing their phase difference, thereby enabling the receiver to derive a synchronous code rate from the phase difference signal, directly or by means of a resettable oscillator which is driven by the phase difference signal.

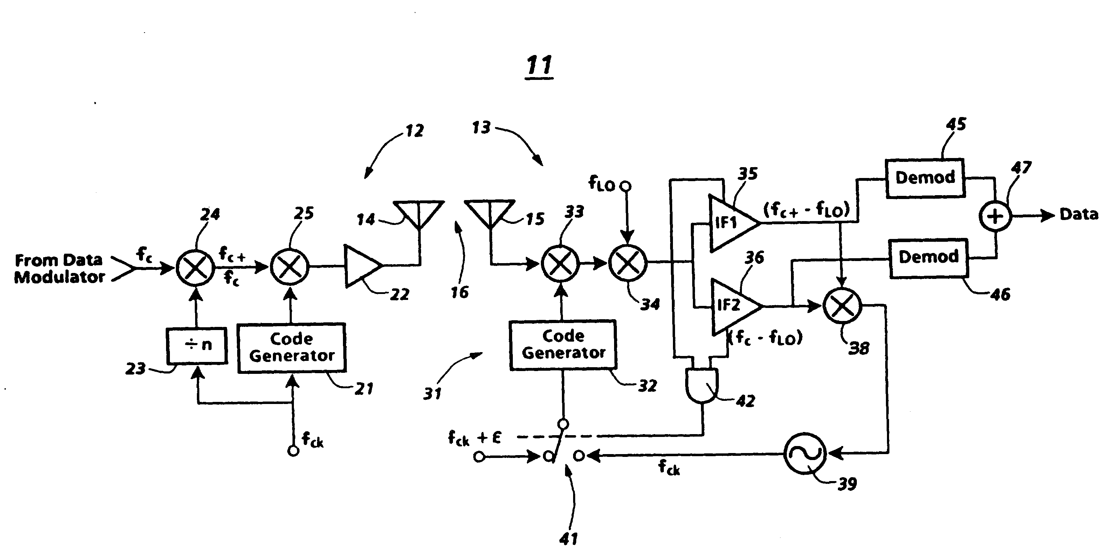

By way of example only, an embodiment of the invention will be described with reference to the attached drawing, which illustrates a direct-sequence spread-spectrum communication system.

Turning now to the Figure, it will be seen that there is a direct-sequence spread-spectrum communication system 11 comprising a transmitter 12 and a receiver 13 which have attennae 14 and 15, respectively, for communicating over a radio link 16 in accordance with the present invention, the transmitter 12 encodes the phase of the clock, f_{ck}, for its code generator 21 into the phase difference between two carriers, f_{c+} and f_{c-}, modulates the signal composed of those two carriers in accordance with a pseudo-random code-like sequence to spread its spectrum, and then amplifies the spread-spectrum signal in a power amplifier 22 to bring it up to a suitable level for radiation from the attenna 14. Unlike a transmitted reference-type synchronization system, the sidebands of these two code-modulated carriers may overlap in the frequency domain.

The carriers f_{c+} and f_{c}. conveniently are produced by mixing the information modulated carrier, f_{c}, that is generated within the transmitter 12 (by means not shown) with a frequency which is derived from the transmitter code clock, f_{ck}. by a frequency divider 23. To that end, as shown, the frequency of the code clock f_{ck}, is divided in the frequency divider 23 by a selected integer n, and the output of the divider 23 then is fed to a double balanced mixer 24 where it is mixed with the information modulated carrier, f_{c}. The mixer 24, therefore, splits the carrier, f_{c}, into sum and difference carrier components, f_{c+} and f_{c-}, respectively, where f_{c+} = f_{c} + f_{ck}/n and f_{c-} = f_{c}- f_{ck}/n. The signal containing these two carrier components, f_{c+} and f_{c-}, then is applied to another double balanced mixer 25 where it is mixed with the code sequence generated by the code generator 21, thereby spreading its spectrum.

Focusing for a moment on the phase difference between the carrier components f_{c+} and f_{c-}, it will be evident that its frequency is given by f_{c+} - f_{c-} = 2f_{ck}/n. Furthermore, their relative phase is directly related to the phase of the transmitter code clock because, for any integer value of n ≥ 2, every zero crossing of their phase difference, f_{c+} - f_{c-}, corresponds to a zero crossing of the transmitter code clock, f_{ck}. This means that the transmitter code clock, f_{ck}, can be recovered at the receiver 13 by recovering the phase difference between the carriers f_{c+} - f_{c-}.

With that in mind, it will be seen that the receiver 13 has a generally conventional sliding correlator 31. More particularly, as shown, the correlator 31 includes a pseudo-random code generator 32 which is matched to the transmitter code generator 21 (i. e., the code generator 32 essentially replicates the psuedo-random sequence generated by the code generator 21 when it is operating in phase synchronism therewith), together with a double balanced mixer 33 for mixing the code sequenced generated by the code generator 32 with the spread- spectrum signal picked-up by the receiver antenna 15.

While the receiver 13 is operating in its idle or standby mode, its code generator 32 is clocked by a local clock, f_{ck} + ε, at a frequency which is slightly offset from the frequency of the transmitter code clock, f_{ck}. The frequency difference between these two clocks preferably is selected so that the relative phase of the transmitter and receiver code generators 21 and 32 changes sufficiently slowly that correlation can be detected in the time it takes for their relative phase to slip by one bit.

Whenever the phase of the code supplied by the code generator 32 correlates with the code modulation of the carriers f_{c+} and f_{c-}, the composite spectrum of those two carriers is de-spread by the mixer 33. Typically, the carrier frequencies f_{c+} and f_{c-}, are so high that significant power would be consumed if they were processed directly to recover their relative phase difference. Moreover, the frequency difference between them generally is only a small percentage of the frequency of either of them, so it would be diffilcult to separate them by straightforward filtering. For those reasons, the de-spread signal is shifted to a lower frequency by mixing it in another mixer 34 with a suitable frequency shifting signal, fₗₒ, such that the difference signal supplied by the mixer 34 is a signal containing the frequency shifted carriers, f_{c+} - fₗₒ and f_{c-} - fₗₒ. The frequency of the phase difference between these lower frequency carriers is (f_{c+} - fₗₒ) - (f_{c-} - fₗₒ) = 2f_{ck}/n, so the frequency and phase encoding of the transmitter code clock, fₗₖ. is unaffected by the frequency shift.

To recover the transmitter code clock, f_{ck}, from the de-spread signal, the output of the mixer 34 is applied to the parallel inputs of a pair of IF amplifiers 35 and 36, one of which is tuned to the frequency of the carrier f_{c+} - fₗₒ and the other of which is tuned to the frequency of the carrier f_{c-} - fₗₒ. As will be appreciated, virtually the same arrangement could be employed if it was desired to process the carriers f_{c+} and f_{c-} directly, without downshifting their frequencies, except that the mixer 34 could be eliminated and the amplifiers 35 and 36 would be tuned to the carriers f_{c+} and f_{c-}, respectively. The amplifiers 35 and 36 filter the signal that is applied to them to separate the carriers f_{c+} - fₗₒ and f_{c-} - fₗₒ (or, f_{c+} and f_{c-}) from each other, and then apply the filtered carriers to still another mixer 38. Consequently, the difference signal supplied by the mixer 38 is the phase difference signal, f_{c+} - f_{c-} which, as previously noted, has a frequency of 2f_{ck}/n.

If n = 2, the phase and frequency of this phase difference signal supplied by the mixer 38 is appropriate for clocking the receiver code generator 32 in phase synchronism with the code modulation of the spread-spectrum signal received by the receiver 13. If, on the other hand, n>2, the phase difference signal suitably is employed for driving a local asynchronous oscillator 39 to cause it to generate a clock signal, f_{ck}, for clocking the receiver code generator 32 in phase synchronism with the spectrum spreading code of the spread-spectrum signal received by the receiver 13. In either case, the code phase at which corelation occurs is unambiguously determined because the frequency of the phase difference signal f_{c+} - f_{c}, is less than the frequency of the code clock,f_{ck}, for all values of n ≥ 2, which means that every zero crossing of the phase difference signal, f_{c+} - f_{c}. corresponds to a zero crossing of the code clock, f_{ck}. Advantageously, the oscillator 39 is resettable, so that its phase is corrected on the leading and trailing edges of the phase difference signal, f_{c+} - f_{c,} thereby correcting the phase of the code clock, f_{ck}, it generates every n/2 cycles.

A switch, generally indicated at 41, is provided for switching the clock input of the receiver code generator 32 from the local code clock, f_{ck} + ε, to the recovered code clock, f_{ck}, whenever the de-spread carriers f_{c+} and f_{c-} are detected at the receiver 13. This carrier detection function can be performed in a variety of different ways by monitoring the signal appearing at the output of the mixer 32 to determine whether the signal strength of the carriers f_{c+} and f_{c-} exceeds a predetermined threshold level or not. For example, the IF amplifiers 35 and 36 may have built-in scanner stop or squelch circuits, such as are found in modern IF amplifiers for radios and the like, which can be employed as carrier detectors. In that event, the carrier detect outputs of the amplifiers 35 and 36 suitably are applied to respective inputs of an AND gate 42 for toggling the switch 41, thereby causing it to apply the recovered code clock, f_{ck}, or the local code clock, f_{ck} + ε, to the receiver code generator 32 in the presence and absence, respectively, of the de-spread carriers f_{c+} and f_{c}.

The integrity of the information that is being transmitted is unaffected by the use of the two carriers f_{c+} and f_{c-} because they both experience the same phase change for data (i. e., the data is a common mode signal). As a result, the phase difference between the carriers f_{c+} and f_{c-} is unaffected by the data, even if it is impressed on them by phase shift keying or the like. Any noise which is not common to both of the carriers f_{c+} and f_{c}, will sum incoherently at the outputs of the amplifiers 35 and 36, while their common mode data will sum coherently, thereby increasing the signal-to-noise ratio of the phase difference signal, f_{c+} - f_{c-} As will be appreciated, the outputs of the IF amplifiers 35 and 36 may be demodulated as at 45 and 46 and then summed by a summer 47 to recover the data.

The above description with reference to the drawing provides economical and readily implemented methods and means for synchronizing low power receivers with transmitters of direct-sequence spread-spectrum communication systems, including systems which employ code-division multiplexing for sharing the available spectrum among multiple users. Moreover, it will be appreciated that this synchronization technique enables the designer to exercise substantial discretion in selecting the carrier frequency and the code rate because they are independent of each other. Furthermore, it will be seen that the described arrangement enables the receiver to identify the transmitted code clock phase unambiguously, with the result that a relatively simple sliding correlator can be employed to find lock. It also will be apparent that once the correlator finds lock, the lock is unaffected by the data modulation of the carrier and tends to be preserved until the transmitted reference signal is interrupted. Still further, the described arrangement allows the processing of the de-spread signal within the receiver to be performed at low frequency where components are less costly and consume less power than at higher frequencies.

## Claims

1. A spread-spectrum communication system having a transmitter (12) for transmitting a spread-spectrum signal, and a receiver (13) for recovering data carried by said spread-spectrum signal;
said transmitter being characterized by comprising a pseudo-random code generator (21) for generating a pseudo-random sequence at a predetermined code rate (f_{ck}), a mixer (24) for mixing a carrier signal (f_{c}) with a signal having a frequency which is a predetermined integer submultiple n of said code rate to supply a composite signal containing sum and difference frequency versions of said carrier signal, and means (25) for modulating said composite signal in accordance with said pseudo-random sequence to supply said spread-spectrum signal;
said receiver being characterized by comprising a local pseudo-random code generator (32) for generating said pseudo-random sequence at a controlled code rate, means (33) for mixing the locally generated pseudo-random sequence with said spread-spectrum signal to de-spread said composite signal when said locally generated sequence is phase aligned with the pseudo-random modulation of said spread-spectrum signal, a local clock source for driving said local code generator at a code rate (f_{ck} + ε) which differs from said predetermined rate, means (35, 36, 38) for producing a phase difference signal representing the relative phase of the sum and difference frequency carriers within said de-spread composite signal, means for deriving said predetermined code rate from said phase difference signal, and means (41) for switching said local pseudo-random code generator from said local clock source to said code rate deriving means when the sum and difference frequency carriers within said de-spread composite signal exceed a predetermined threshold level;
whereby the code rate of said local code generator is controlled to phase align and then synchronize said locally generated pseudo-random sequence with the pseudo-random modulation of said spread-spectrum signal using a transmitted code rate reference for maintaining synchronism of the phase aligned sequences.

2. A spread-spectrum communication system as claimed in Claim 1, wherein
the signal with which said carrier is mixed in said transmitter has a frequency of one half said predetermined code rate, whereby said phase difference signal at said receiver has a frequency equal to said predetermined code rate, and
said switching means switches said local code generator from said local clock source to said phase difference signal for synchronizing said locally generated pseudo-random sequence with the pseudo-random modulation of said spread-spectrum signal after phase alignment has been achieved.

3. A spread-spectrum communication system as claimed in Claim 1, wherein
the signal with which said carrier is mixed in said transmitter has a frequency of less than one half said predetermined code rate, whereby said phase difference signal at said receiver has a frequency proportional to said predetermined code rate,
said receiver further includes an oscillator (39) which is driven by said phase difference signal for generating a clock signal at a frequency which is equal to said predetermined code rate, and
said switching means switches said local code generator from said local clock source to said clock signal for synchronizing said locally generated pseudo-random sequence with the pseudo-random modulation of said spread-spectrum signal after phase alignment has been achieved.

4. A spread-spectrum communication system as claimed in Claim 3, wherein
said oscillator is an asynchronous oscillator which is reset on leading and trailing edges of said phase difference signal, thereby phase correcting said clock signal on every zero-crossing of said phase difference signal.

5. A spread-spectrum communication system as claimed in Claim 1, wherein
said switching means is a local oscillator operating at said local clock code rate and at said predetermined code rate when said sum and difference frequency carriers within said de-spread signal are below and above, respectively, said threshold level.

6. A spread-spectrum communication system as claimed in any one of Claims 1-5 wherein said receiver further includes
means (35, 36) for filtering said de-spread composite signal to separate said sum frequency carrier from said difference frequency carrier, and
means (38) for mixing said sum frequency carrier with said difference frequency carrier to supply said phase difference signal.

7. A spread-spectrum communication system as claimed in Claim 6, wherein said receiver further includes
frequency shifting means (34) for shifting said composite signal to a lower frequency prior to filtering it, whereby said sum frequency carrier and said difference frequency carrier are shifted to lower frequencies prior to being separated from each other.

8. A method for synchronizing a transmitter and a receiver of a direct-sequence spread-spectrum communication system wherein identical pseudo-random sequences are employed at the transmitter and receiver for spectrum spreading and spectrum de-spreading, respectively; said method being characterized by comprising the steps of
transmitting a spread-spectrum signal composed of two carriers having a relative phase difference which is proportional to a predetermined code rate for the spectrum spreading sequence employed at said transmitter,
recovering, at said receiver, a de-spread signal having a frequency determined by the relative phase difference of said carriers, and
deriving a clock signal from said phase difference signal at said receiver for synchronizing said spectrum de-spreading sequence with said spectrum spreading sequence.

9. A method as claimed in Claim 8, wherein
said carriers have frequencies selected to cause said phase difference signal to have a frequency which is equal to said predetermined code rate, and
said phase difference signal is said clock signal.

10. A method as claimed in Claim 8, wherein
said carriers have frequencies selected to cause said phase difference signal to have a frequency which is an integer submultiple of said predetermined code rate.

## Patentansprüche

1. Spread-Spectrum-Übertragungssystem mit einem Sender (12), der ein Spread-Spectrum-Signal sendet, und einem Empfänger (13), der durch das Spread-Spectrum-Signal beförderte Daten rückgewinnt,
wobei der Sender dadurch gekennzeichet ist, daß er einen pseudozufälligen Codegenerator (21), der eine pseudozufällige Folge bei einer vorbestimmten Coderate (f_{ck}) erzeugt, einen Mischer (24), der ein Trägersignal (f_{c}) mit einem Signal mit einer Frequenz mischt, die ein vorbestimmtes ganzzahliges Untervielfaches n der Coderate ist, um ein zusammengesetztes Signal zu liefern, das Summen- und Differenzfrequenzversionen des Trägersignals enthält, und eine Einrichtung (25) umfaßt, die das zusammengesetzte Signal nach Maßgabe der pseudozufälligen Folge moduliert, um das Spread-Spectrum-Signal zu liefern,
wobei der Empfänger dadurch gekennzeichet ist, daß er einen lokalen pseudozufälligen Codegenerator (32), der die pseudozufällige Folge bei einer gesteuerten Coderate erzeugt, eine Einrichtung (33), die die lokal erzeugte pseudozufällige Folge mit dem Spread-Spectrum-Signal mischt, um das zu zusammengesetzte Signal zu entspreizen, wenn die lokal erzeugte Folge mit der pseudozufälligen Modulation des Spread-Spectrum-Signals phasenabgeglichen ist, eine lokale Taktquelle, die den lokalen Codegenerator bei einer Coderate (f_{ck} + ε) treibt, die sich von der vorbestimmten Rate unterscheidet, eine Einrichtung (35, 36, 38), die ein Phasendifferenzsignal erzeugt, das die relative Phase der Summen- und Differenzfrequenzträger innerhalb des entspreizten zusammengesetzten Signals darstellt, eine Einrichtung, die die vorbestimmte Coderate aus dem Phasendifferenzsignal gewinnt, und eine Einrichtung (41) umfaßt, die den lokalen pseudozufälligen Codegenerator von der lokalen Taktquelle auf die Coderaten-Gewinnungseinrichtung umschaltet, wenn die Summen- und Differenzfrequenzträger innerhalb des entspreizten zusammengesetzten Signals einen vorbestimmten Schwellenpegel überschreiten,
wobei die Coderate des lokalen Codegenerators gesteuert wird, um einen Phasenabgleich und dann eine Synchronisierung der lokal erzeugten pseudozufälligen Folge mit der pseudozufälligen Modulation des Spread-Spectrum-Signals unter Verwendung einer gesendeten Coderaten-Referenz zum Aufrechterhalten des Synchronismus der phasenabgeglichenen Folgen vorzunehmen.

2. Spread-Spectrum-Übertragungssystem nach Anspruch 1, bei dem
das Signal, mit dem der Träger in dem Sender gemischt wird, eine Frequenz von einer Hälfte der vorbestimmten Coderate aufweist, wodurch das Phasendifferenzsignal in dem Empfänger eine Frequenz gleich der vorbestimmten Coderate aufweist, und
die Schalteinrichtung den lokalen Codegenerator von der lokalen Taktquelle auf das Phasendifferenzsignal umschaltet, um die lokal erzeugte pseudozufällige Folge mit der pseudozufälligen Modulation des Spread-Spectrum-Signals zu synchronisieren, nachdem ein Phasenabgleich erreicht worden ist.

3. Spread-Spectrum-Übertragungssystem nach Anspruch 1, bei dem
das Signal, mit dem der Träger in dem Sender gemischt wird, eine Frequenz von weniger als einer Hälfte der vorbestimmten Coderate aufweist, wodurch das Phasendifferenzsignal in dem Empfänger eine Frequenz proportional der vorbestimmten Coderate aufweist,
der Empfänger weiter einen Oszillator (39) umfaßt, der durch das Phasendifferenzsignal getrieben wird, um ein Taktsignal bei einer Frequenz zu erzeugen, die gleich der vorbestimmten Coderate ist, und
die Schalteinrichtung den lokalen Codegenerator von der lokalen Taktquelle auf das Taktsignal umschaltet, um die lokal erzeugte pseudozufällige Folge mit der pseudozufälligen Modulation des Spread-Spectrum-Signals zu synchronisieren, nachdem ein Phasenabgleich erreicht worden ist.

4. Spread-Spectrum-Übertragungssystem nach Anspruch 3, bei dem
der Oszillator ein asynchroner Oszillator ist, der bei Vorder- und Rückflanken des Phasendifferenzsignals rückgesetzt wird, wodurch die Phase des Taktsignals bei jedem Nulldurchgang des Phasendifferenzsignals korrigiert wird.

5. Spread-Spectrum-Übertragungssystem nach Anspruch 1, bei dem
die Schalteinrichtung ein lokaler Oszillator ist, der bei der lokalen Taktcoderate und bei der vorbestimmten Coderate arbeitet, wenn die Summen- und Differenzfrequenzträger innerhalb des entspreizten Signals unter bzw. über dem Schwellenpegel liegen.

6. Spread-Spectrum-übertragungssystem nach einem der Ansprüche 1-5, bei dem Empfänger weiter umfaßt:
eine Einrichtung (35, 36), die das entspreizte zusammengesetzte Signal filtert, um den Summenfrequenzträger von dem Differenzfrequenzträger zu trennen, und
eine Einrichtung (38), die den Summenfrequenzträger mit dem Differenzfrequenzträger mischt, um das Phasendifferenzsignal zu liefern.

7. Spread-Spectrum-übertragungssystem nach Anspruch 6, bei dem der Empfänger weiter umfaßt:
eine Frequenzverschiebungseinrichtung (34), die das zusammengesetzte Signal vor seiner Filterung auf eine tiefere Frequenz verschiebt, wodurch der Summenfrequenzträger und der Differenzfrequenzträger auf tiefere Frequenzen verschoben werden, bevor sie voneinander getrennt werden.

8. Verfahren zum Synchronisieren eines Senders und eines Empfängers eines Direktfolge-Spread-Spectrum-übertragungssystems, bei dem identische pseudozufällige Folgen im Sender und im Empfänger verwendet werden, um das Spektrum zu spreizen bzw. zu entspreizen, wobei das Verfahren dadurch gekennzeichnet ist, daß es die Schritte umfaßt:
Senden eines Spread-Spectrum-Signals, das aus zwei Trägern mit einer relativen Phasendifferenz besteht, die proportional einer vorbestimmten Coderate für die in dem Sender verwendete Spektrum-Spreizungsfolge ist,
in dem Empfänger Rückgewinnen eines entspreizten Signals mit einer durch die relative Phasendifferenz der Träger bestimmten Frequenz und
Gewinnen eines Taktsignals aus dem Phasendifferenzsignal in dem Empfänger, um die Spektrum-Entspreizungsfolge mit der Spektrum-Spreizungsfolge zu synchronisieren.

9. Verfahren nach Anspruch 8, bei dem
die Träger Frequenzen aufweisen, die gewählt werden, um zu bewirken, daß das Phasendifferenzsignal eine Frequenz aufweist, die gleich der vorbestimmten Coderate ist, und
das Phasendifferenzsignal das Taktsignal ist.

10. Verfahren nach Anspruch 8, bei dem
die Träger Frequenzen aufweisen, die gewählt werden, um zu bewirken, daß das Phasendifferenzsignal eine Frequenz aufweist, die ein ganzzahliges Untervielfaches der vorbestimmten Coderate ist.

## Revendications

1. Système de communication à spectre étalé ayant un émetteur (12) pour émettre un signal à spectre étalé, et un récepteur (13) pour récupérer des données portées par ledit signal à spectre étalé;
l'émetteur étant caractérisé par le fait qu'il comprend un générateur (21) de code pseudo-aléatoire destiné à produire une séquence pseudo-aléatoire avec une fréquence de code (f_{ck}) prédéterminée, un mélangeur (24) pour mélanger un signal de porteuse (f_{c}) à un signal ayant une fréquence qui est un sous-multiple entier prédéterminé n de la fréquence de code afin de fournir un signal composite contenant des versions à fréquence somme et à fréquence différence du signal de porteuse, et un moyen (25) pour moduler le signal composite en conformité avec la fréquence pseudo-aléatoire afin de fournir le signal à spectre étalé;
le récepteur étant caractérisé par le fait qu'il comprend un générateur (32) de code pseudo-aléatoire destiné à produire la séquence pseudo-aléatoire avec une fréquence de code commandée, un moyen (33) pour mélanger la séquence pseudo-aléatoire produite localement au signal à spectre étalé pour désétaler ce signal composite lorsque la séquence produite localement est alignée en phase avec la modulation pseudo-aléatoire du signal à spectre étalé, une source d'horloge locale pour attaquer le générateur de code local avec une fréquence de code (f_{ck} + ε) qui diffère de la fréquence prédéterminée, un moyen (35, 36, 38) pour produire un signal de différence de phase représentant la phase relative entre les porteuses à fréquence somme et à fréquence différence se trouvant dans le signal composite désétalé, un moyen pour déterminer la fréquence de code prédéterminée à partir du signal de différence de phase, et un moyen (41) pour produire la commutation du générateur de code pseudo-aléatoire de la source d'horloge locale sur le moyen de détermination de la fréquence de code, lorsque les porteuses à fréquence somme et à fréquence différence se trouvant dans le signal composite désétalé, dépassent un niveau de seuil prédéterminé;
de telle sorte que la fréquence de code du générateur de code local est commandée de façon à aligner en phase puis à synchroniser la séquence pseudo-aléatoire produite localement sur la modulation pseudo-aléatoire du signal à spectre étalé en utilisant une référence de fréquence de code transmise pour conserver le synchronisme entre les séquences alignées en phase.

2. Système de communication à- spectre étalé selon la revendication 1, dans lequel
le signal avec lequel la porteuse est mélangée dans l'émetteur, a une fréquence égale à la moitié de la fréquence de code prédéterminée, de telle sorte que le signal de différence de phase, dans le récepteur, a une fréquence égale à la fréquence de code prédéterminée, et
le moyen de commutation commute le générateur de code local entre la source d'horloge locale et le signal de différence de phase pour synchroniser la séquence pseudo-aléatoire produite localement avec la modulation pseudo-aléatoire du signal à spectre étalé après que l'alignement de phase a été effectué.

3. Système de communication à spectre étalé selon la revendication 1, dans lequel
le signal avec lequel la porteuse est mélangée dans l'émetteur a une fréquence inférieure à la moitié de la fréquence de code prédéterminée, de telle sorte que le signal de différence de phase, dans le récepteur, a une fréquence proportionnelle à la fréquence de code prédéterminée,
le récepteur comporte en outre un oscillateur (39) qui est attaqué par le signal de différence de phase pour produire un signal d'horloge à une fréquence qui est égale à la fréquence de code prédéterminée, et
le moyen de commutation commute le générateur de code local entre la source d'horloge locale et le signal d'horloge pour synchroniser la séquence pseudo-aléatoire produite localement avec la modulation pseudo-aléatoire du signal à spectre étalé après que l'alignement de phase a été effectué.

4. Système de communication à spectre étalé selon la revendication 3, dans lequel
l'oscillateur est un oscillateur asynchrone qui est réinitialisé sur les fronts montants et descendants du signal de différence de phase, ce qui permet de corriger la phase du signal d'horloge lors de chaque passage à zéro du signal de différence de phase.

5. Système de communication à spectre étalé selon la revendication 1, dans lequel
le moyen de commutation est un oscillateur local fonctionnant à la fréquence de code de l'horloge locale et à la fréquence de code prédéterminée lorsque les porteuses à fréquence somme et à fréquence différence se trouvant dans le signal désétalé sont respectivement inférieure et supérieure au niveau de seuil.

6. Système de communication à spectre étalé selon l'une quelconque des revendications 1-5, dans lequel le récepteur comporte en outre
un moyen (35,36) pour filtrer le signal composite désétalé afin de séparer la porteuse à fréquence somme de la porteuse à fréquence différence, et
un moyen (38) pour mélanger la porteuse à fréquence somme à la porteuse à fréquence différence afin de fournir le signal de différence de phase.

7. Système de communication à spectre étalé selon la revendication 6, dans lequel le récepteur comporte en outre
un moyen (34) de décalage de fréquence pour décaler le signal composite à une fréquence inférieure avant de le filtrer, de façon que la porteuse à fréquence somme et la porteuse à fréquence différence soient décalées vers des fréquences inférieures avant d'être séparées l'une de l'autre.

8. Procédé pour synchroniser un émetteur et un récepteur d'un système de communication à spectre étalé à séquence directe, dans lequel des séquences pseudoaléatoires identiques sont utilisées dans l'émetteur et le récepteur, respectivement pour l'étalement de spectre et le désétalement de spectre; le procédé étant caractérisé par le fait qu'il comprend les étapes qui consistent
à émettre un signal à spectre étalé composé de deux porteuses ayant une différence de phase relative qui est proportionnelle à une fréquence de code prédéterminée pour la séquence d'étalement de spectre utilisée dans l'émetteur,
à récupérer, dans ledit récepteur, un signal désétalé ayant une fréquence déterminée par la différence de phase relative des porteuses, et
à déterminer un signal d'horloge à partir du signal de différence de phase, dans le récepteur, pour synchroniser la fréquence de désétalement de spectre avec la séquence d'étalement de spectre.

9. Procédé selon la revendication 8, dans lequel
les porteuses ont des fréquences choisies de façon à faire en sorte que le signal de différence de phase ait une fréquence qui est égale à la fréquence de code prédéterminée, et
le signal de différence de phase est ledit signal d'horloge.

10. Procédé selon la revendication 8, dans lequel
les porteuses ont des fréquences choisies de façon à faire en sorte que le signal de différence de phase soit une fréquence qui est un sous multiple entier de la fréquence de code prédéterminée.
